(19) Europäisches Patentamt
European Patent Office
Office européen des brevets

(11) **EP 3 670 177 A1**

(12) **EUROPÄISCHE PATENTANMELDUNG**

(43) Veröffentlichungstag:
24.06.2020 Patentblatt 2020/26

(21) Anmeldenummer: 18215388.2

(22) Anmeldetag: **21.12.2018**

(51) Int Cl.:
*B32B 7/12* *(2006.01)*       *B32B 27/08* *(2006.01)*
*B32B 27/32* *(2006.01)*       *B32B 27/34* *(2006.01)*
*B32B 27/40* *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Nolax AG**
**6203 Sempach Station (CH)**

(72) Erfinder:
• **Traber, Bruno**
  **3110 Münsingen (CH)**
• **Huber, Kevin**
  **6210 Sursee (CH)**

(74) Vertreter: **Hepp Wenger Ryffel AG**
**Friedtalweg 5**
**9500 Wil (CH)**

(54) **MEHRSCHICHTFILM ZUR BESCHICHTUNG EINES POLYMERFORMTEILS**

(57)    Die Erfindung betrifft einen Mehrschichtfilm zu Beschichtung eines Polymerformteils aufweisend eine Haftvermittlerschicht, die im Wesentlichen aus einem Polyamid besteht, wobei das Polyamid einen gegenüber herkömmlichen Hot-Melt Polyamiden erhöhten Schmelzpunkt aufweist. Die Erfindung betrifft weiter ein beschichtetes Polymerformteil, beschichtet mit einem Mehrschichtfilm wie eingangs beschrieben, ein Verfahren zur Herstellung eines solchen Mehrschichtfilms, sowie die Verwendung des Mehrschichtfilms in der Automobil-Industrie.

Fig 3

EP 3 670 177 A1

**Beschreibung**

Die Erfindung betrifft einen Mehrschichtfilm zu Beschichtung eines Polymerformteils aufweisend eine Haftvermittlerschicht, die im Wesentlichen aus einem Polyamid besteht. Die Erfindung betrifft weiter ein beschichtetes Polymerformteil, umfassend einen Körper und beschichtet mit einem Mehrschichtfilm wie eingangs beschrieben, ein Verfahren zur Herstellung eines solchen Mehrschichtfilms, sowie die Verwendung des Mehrschichtfilms in der Automobil-Industrie.

In der Folienindustrie werden Polyamide für verschiedene Verwendungszwecke, beispielsweise in Mehrschichtfilmen eingesetzt. Die Polyamide können als Co-Polyamide vorliegen. Bestimmte Polyamide werden dabei als Klebstoff für Substrate mit unterschiedlichen Eigenschaften eingesetzt. Diese Polyamide werden häufig als Hot-Melt Polyamide bezeichnet. Hot-Melt Polyamide haben typischerweise einen Schmelzpunkt von etwa 100°C bis 160°C und eine Viskosität (Schmelze-Volumenfliessrate) von 6 bis 500 cm$^3$/10 min, gemessen nach ISO 1133.

In EP 1 808 468 wird beispielsweise der Einsatz von reaktiven Schmelzklebstoffen auf Basis von Copolyamid in Hybridbauteilen, beschrieben. Anwendung finden diese Hybridbauteile z.B. im Fahrzeugbau und im Flugzeugbau. In diesen Industrien geht es häufig darum, die Oberflächen von Spritzgussteilen aus Polypropylen und verstärktem Polypropylen weiter zu verarbeiten oder zu veredeln

Während ein Kleben mit Hot-Melt Polyamiden eine Variante der Haftvermittlung darstellt, kann ein Verbund allerdings auch hergestellt werden, wenn eine Folie mit Polyamid-Zusätzen auf die Oberfläche eines Polypropylen-Formteils aufgebracht wird (z.B. WO 2010/000483).

Geeignete Mehrschichtfilme können durch Co-Extrusion erhalten werden. In WO 99/44824 wird beispielsweise ein Mehrschichtfilm offenbart, der aus einer ersten äusseren Schicht aus Polyolefinen, einer zweite Schicht aus Polyolefinen, Polystyrol oder Polyurethan, einer dritten Schicht aus Polyamid mit einem Schmelzpunkt von höchstens 160°C und einer vierten, äusseren Schicht aus Polyester besteht. So extrudierte Folien haften jedoch nicht besonders gut aneinander und bedürfen einer Verbindungsschicht zwischen der zweiten und der dritten Schicht. Das gleiche Problem wird in WO2016/069335 adressiert, wo thermoplastische Elastomere über eine Verbindungsschicht mit einer Polyamidschicht verbunden werden.

Es fehlt also im Stand der Technik an einem Mehrschichtfilm zur Beschichtung eines Polymerformteils, wobei der Mehrschichtfilm eine erste Seite mit ersten Eigenschaften, z.B. eine polare Oberfläche aufweist, und gleichzeitig eine zweite Seite mit von den ersten Eigenschaften verschiedenen Eigenschaften, z.B. eine apolare Unterseite, aufweist, und wobei zwischen der ersten polaren Seite und der zweiten apolaren Seite eine Schicht haftvermittelnd wirkt.

Es ist die Aufgabe der vorliegenden Erfindung, die Nachteile im Stand der Technik zu beheben. Insbesondere ist es die Aufgabe der vorliegenden Erfindung, einen Mehrschichtfilm zur Beschichtung eines Polymerformteils bereitzustellen, bei dem die beiden äusseren Seitenflächen verschiedene Eigenschaften aufweisen aber derart verbunden sind, dass die Mehrschichtfolie einen Klima-Wechseltest nach den Standards der Automobilindustrie besteht. Dies soll auf möglichst einfache Weise, also mit wenig Arbeitsschritten und ökonomischem Einsatz von Materialien, erreicht werden.

Die Aufgabe wird durch einen Mehrschichtfilm gemäss Anspruch 1 gelöst. Denn es hat sich überraschend herausgestellt, dass eine Haftvermittlerschicht auf Polyamidbasis die erforderliche Verbindungsfunktion haben kann, wenn das Polyamid eine hohe Schmelztemperatur aufweist.

Ein erster Aspekt der Erfindung bezieht sich auf einen Mehrschichtfilm zur Beschichtung eines Polymerformteils umfassend wenigstens

-   eine erste Schicht enthaltend einen polaren Schmelzklebstoff, bevorzugt enthaltend ein polares thermoplastisches Elastomer;
-   eine zweite Schicht enthaltend ein apolares Polymer;
-   eine Haftvermittlerschicht bestehend zu wenigstens 50%, bevorzugt wenigstens 75%, besonders bevorzugt zu wenigstens 90% aus Polyamid, wobei sich die Haftvermittlerschicht zwischen der ersten und der zweiten Schicht befindet;

dadurch gekennzeichnet dass das Polyamid einen Schmelzpunkt von wenigstens 180°C, bevorzugt einen Schmelzpunkt von 180°C bis 205°C, ganz besonders bevorzugt einen Schmelzpunkt von 185°C bis 200°C aufweist, gemessen nach ISO 11357.

Unter "Polyamid" im Sinne dieser Erfindung wird ein Polyamid Homopolymer, ein Co-Polyamid oder ein Co-Polymer mit Polyamid-Anteil verstanden. Denkbar ist also ein Polyamid Homopolymer mit sich wiederholenden Einheiten der gleichen chemischen Struktur oder ein Co-Polyamid mit Polyamid-Einheiten von unterschiedlicher chemischer Struktur (z.B. PA6-Einheiten, PA11-Einheiten, PA12-Einheiten, PA66-Einheiten). Die Polyamid-Einheiten unterschiedlicher chemischer Struktur können statistisch oder in Block-Einheiten angeordnet sein. Das Co-Polymer mit Polyamid-Anteil ist ein Co-Polymer aus Polyamid-Segmenten und Nicht-Polyamid-Segmenten (z.B. Polyether-Segmenten, Polyester-Segmenten). Die Polyamid-Segmente und Nicht-Polyamid-Segmente können statistisch oder in Block-Einheiten angeordnet sein. Wenn es sich um ein Co-Polymer mit Polyamid-Segmenten und Nicht-Polyamid-Segmenten handelt, beträgt der Anteil von Polyamid-Segmenten wenigstens 60%, bevorzugt wenigstens 80%, besonders bevorzugt wenigstens 90%. Polyamide, Co-Polyamide, Co-Polymere mit Polyamid-Anteil und/oder andere Polymere können einzeln vorliegen oder als Polyblend kombiniert werden.

Das verwendete Polyamid ist dadurch gekennzeichnet, dass es einen Schmelzpunkt von wenigstens 180°C aufweist. Besonders bevorzugt ist ein Schmelzpunkt von wenigstes 180°C und höchstens 205°C. Ganz besonders bevorzugt ist ein Schmelzpunkt von wenigstens 185°C und 200°C, gemessen nach ISO 11357.

Es hat sich unerwartet gezeigt, dass ein Polyamid aufweisend einen Schmelzpunkt von wenigstens 180°C eine ausgezeichnete Haftung zwischen dem polaren Schmelzklebstoff der ersten Schicht und dem apolaren Polymer der zweiten Schicht vermittelt. Insbesondere delaminiert die Folie nicht in einem Klimawechseltest PV1200 der Volkswagen AG oder BMW 308.2 wie er in der Automobilindustrie angewandt wird. Die Folie kann auch nach Durchführung eines solchen Tests nur unter Zerstörung in die einzelnen Bestandteile getrennt werden. Entgegen den Erwartungen des Fachmanns, wird das erfindungsgemässe Polyamid im Klimawechseltest auch bei Minustemperaturen von bis zu -30°C nicht spröde, sodass die Verbindung mit anderen Schichten des Films keiner zusätzlichen Haftvermittlerschicht bedarf. Ebenfalls hat sich herausgestellt, dass das Polyamid aufweisend einen Schmelzpunkt wie vorstehend beschrieben in der Gegenwart von Feuchtigkeit weniger unerwünschte Veränderungen der Eigenschaften durchläuft als polyamidbasierte Hot-Melt-Klebstoffe. Beispielsweise bleibt die erfindungsgemässe Polyamid-Schicht auch nach mehreren Stunden bei relativer Luftfeuchtigkeit von 80% fest und formstabil.

Die Schmelztempertur des Polyamids wird gemäss ISO 11357 bestimmt.

Die Obergrenze des bevorzugten Bereichs von Schmelzpunkten ergibt sich, weil damit höhere Temperaturen bei der Verarbeitung des Polyamids einhergehen, die sich bei der Verarbeitung des Polyamids zusammen mit anderen Kunststoffen nachteilig auswirken können. Beispielsweise müssten bei der Co-Extrusion von Polyamid mit einem Schmelzpunkt von > 205°C und Polymeren angrenzender Schichten die Temperaturen der Düse entsprechend höher gewählt werden, was sich auf co-extrudierte Polymerzusammensetzungen zersetzend auswirken kann.

Im Sinne dieser Erfindung ist ein Schmelzklebstoff ein Polymer, das so zusammengesetzt ist, dass es unter Hitzeeinwirkung oder durch ein Lösungsmittel, durch physikalische Aktivierung, beispielsweise Ultraschall oder Hochfrequenz, oder durch Wärmeeintrag, wie z.B. durch Infrarotstrahlung aktiviert werden kann, und sodann eine stoffschlüssige Verbindung eingehen kann.

Im Sinne dieser Erfindung ist ein polarer Schmelzklebstoff ein Schmelzklebstoff, welcher eine Oberflächenspannung von mehr als 35 mN/m aufweist.

Im Sinne dieser Erfindung ist ein apolares Polymer ein Polymer, welches in unbehandelten Zustand eine Oberflächenspannung von weniger als 35 mN/m aufweist. Als unbehandelt gilt insbesondere eine Oberfläche, die keiner Koronabehandlung, Plasmabehandlung oder Beflammung unterzogen wurde.

Die Oberflächenspannung lässt sich mit handelsüblichen Testtinten bestimmen. Verschiedene Testreihen sind gemäss der DIN 53364 definiert. Eine andere Möglichkeit zur Bestimmung der Oberflächenspannung besteht im Messen des sog. Kontakt- oder Benetzungswinkels. Dabei wird der Winkel zwischen der Oberfläche und einem Wassertropfen gemessen, bespielsweise mit einem Kontaktwinkemessgerät von Krüss. Je besser die Benetzbarkeit der Oberfläche desto kleiner der Winkel.

Besonders bevorzugt weist die verwendete Haftvermittlerschicht einen Kristallinitätsanteil $\alpha$ von > 0.60, bevorzugt ein $\alpha$ von 0.62 bis 0.72, besonders bevorzugt ein $\alpha$ von 0.64 bis 0.70 auf.

Im Sinne dieser Erfindung ist unter Kristallinitätsanteil $\alpha$ des Polyamids das Verhältnis der gemessenen Schmelzenthalpie $\Delta H_f$ zur Schmelzenthalpie eines zu 100% kristallinen Polyamids $\Delta H_{f100\%}$ :

$$\alpha = \frac{\Delta H_f}{\Delta H_{f100\%}}$$

Als $\Delta H_{f100\%}$ für ein zu 100% kristallines Polyamid werden Literaturwerte verwendet (E. Kaisersberger, St. Knappe, H. Möhler, TA for Polymer Engineering DSC, TG, DMA; in: Netzsch Annual for science and industry, Vol. 2, 1993). Für ein Polyamid PA 12 wurden beispielsweise 95 J/g eingesetzt. Die gemessene Schmelzenthalpie $\Delta H_f$ des Polyamids wird mittels Differenzkalorimetrie bestimmt. Beispielsweise kann der Kristallinitätsanteil des Polyamids mit einem DSC Messinstrument von Mettler Toledo STAR[e] System bestimmt werden. Der Wärmestrom wird über den gesamten Kristallisations- und Schmelzbereich der Probe als Funktion der Temperatur geplottet. Die Basislinie wird im Bereich der Schmelze gelegt und in den Bereich unmittelbar nach dem Glasübergang extrapoliert. Sodann wird über den ganzen Kristallisations- und Schmelzbereich integriert, um die Schmelzenthalpie in J/g zu erhalten. Gemessen wurde unter $N_2$ über einen Temperaturbereich von 0°C bis 300°C, mit einem Fortschritt von 10°C/min.

Das in der Haftvermittlerschicht verwendete Polyamid weist bevorzugt eine Schmelze-Volumenfliessrate von < 13 cm$^3$/10 min, bevorzugt 6.0 bis 12.0 cm$^3$/10 min, besonders bevorzugt von 7.0 bis 11.0 cm$^3$/10 min auf, messbar nach ISO 1133, bei einer Messtemperatur von 235°C und einer Messlast von 5kg Gewicht. Dadurch unterscheidet sich das Polyamid von Hot-Melt Polyamiden, welche typischerweise deutlich höhere Schmelze-Volumen-Fliessraten (MVR) zeigen. Das erfindungsgemässe Polyamid weist typischerweise eine Schmelzedichte von ca. 0.90 bis 1.10 g/cm$^3$ auf.

Eine erste Schicht aus polarem Schmelzklebstoff hat den Vorteil, dass sie unter bestimmten Bedingungen aktiviert werden kann. Dadurch kann die polare Oberfläche des Mehrschichtfilms direkt verklebt werden. Es können auch Dekorelemente oder andere Elemente, wie z.B. Haken, angebracht werden.

Bevorzugt umfasst die erste Schicht ein thermoplastisches Elastomer. Bevorzugt umfasst die erste Schicht thermoplastisches Polyurethan (TPU). Bevorzugt besteht die erste Schicht zu ≥ 50%, besonders bevorzugt zu ≥ 75% und ganz besonders bevorzugt zu ≥ 90% aus thermoplastischem Elastomer respektive TPU. Denkbar sind jedoch auch thermoplastische Elastomere auf Polyamid-, Polyimid-, Copolyamid-, Polyester-, Copolyester-, Polyetherblockamid-, Acrylat- oder Polycarbonat-Basis, wobei diese Liste nicht abschliessend ist.

Die Verwendung von thermoplastischen Elastomeren und insbesondere von TPU hat den Vorteil, dass die Materialien besonders vielseitig sind und besonders einfach dekoriert, verklebt, laminiert oder lackiert werden können.

Bevorzugt enthält die zweite Schicht ein apolares Polymer. Bevorzugt ist das apolare Polymer ausgewählt aus der Gruppe bestehend aus Polypropylen, modifiziertem Polypropylen, Polyethylen, modifiziertem Polyethylen, Polyoxymethylen, Ethylvinylacetat, Styrolblockcopolymere, Ionomere, Olefine, Kautschuke oder Plastomere sowie Copolymere und Mischungen davon.

Bevorzugt besteht die zweite Schicht zu ≥ 50%, besonders bevorzugt zu ≥ 75% und ganz besonders bevorzugt zu ≥ 90% aus einem apolaren Polymer wie vorstehend beschrieben.

Besonders bevorzugt besteht die zweite Schicht aus Polypropylen oder modifiziertem Polypropylen, da sich diese besonders gut mit Spritzgussteilen aus Polypropylen verbinden lassen, was wiederum ein kostengünstiges und häufig verwendetes Material ist.

Den Polymeren der ersten und der zweiten Schicht können weitere in der Folienindustrie übliche Verarbeitungshilfsmittel und Zusatzstoffe beigemischt werden, wie beispielsweise Füllstoffe oder Farbstoffe.

Es ist bevorzugt, dass der Mehrschichtfilm durch Co-Extrusion von wenigstens zwei Schichten, bevorzugt aber durch Co-Extrusion von drei Schichten, also der ersten Schicht, der Haftvermittlerschicht und der zweiten Schicht, erhalten wird.

Ein Grund für die mangelhafte Verbundstärke zwischen TPU und Polyamid sind die Extrusionstemperaturen, die bei Verwendung eines herkömmlichen Hot-Melt-Polyamids tief gehalten werden müssen. Ohne nachträgliche Temperaturexposition ist die Schichtenhaftung ungenügend. Wenn Polyamid mit einem Schmelzpunkt von wenigstens 180°C, bevorzugt von wenigstens 180° und höchstens 205°C, ganz besonders bevorzugt einem Schmelzpunkt von wenigstens 185°C und höchstens 200°C, wie vorstehend beschrieben, verwendet wird, können Extrusionstemperaturen von 200°C und höher gewählt werden. Ein so extrudierter Mehrschichtfilm besteht einen Klimawechseltest, wie er in der Autoindustrie verwendet wird. Es sind keine weiteren Verfahrensschritte, keine Nachbehandlung und kein Laminieren unter Wärmeeinwirkung notwendig.

Bevorzugt ist das in der Haftvermittlerschicht enthaltene Polyamid ausgewählt aus der Gruppe bestehend aus Polyamid 6, Polyamid 66, Polyamid 12, PA 46, PA 1010, PA 11; Co-Polyamid aufweisend Einheiten von Polyamid 6, Polyamid 66, Polyamid 12, PA 46, PA 1010, PA 11; Co-Polymer aufweisend Einheiten von Polyamid 6, Polyamid 66, Polyamid 12, PA 46, PA 1010, PA 11, und/oder Block-Co-Polymer aufweisend Polyamid 6-Segmente, Polyamid 66-Segmente, Polyamid 12-Segmente, PA 46-Segmente, PA 1010-Segmente und/oder PA 11-Segmente. Bevorzugt sind auch Polyamid-Blends. Das in der Haftvermittlerschicht enthaltene Polyamid muss jeweils einen Schmelzpunkt von wenigstens 180°C, bevorzugt von wenigstens 180° und höchstens 205°C, ganz besonders bevorzugt einem Schmelzpunkt von wenigstens 185°C und höchstens 200°C, wie vorstehend beschrieben, aufweisen. Damit ist das Polyamid im gleichen Temperaturfenster wie die polare und die apolare Schicht verarbeitbar. Im Falle von Co-Polymeren können Polyamid-Segmente beispielsweise mit Polyether-Segmenten kombiniert werden. Es können sich PA-Elastomere ergeben.

Besonders bevorzugt ist ein Co-Polyamid im Wesentlichen bestehend aus PA 12, bevorzugt aufweisend einen PA 12-Anteil von ≥80 Gew-%, noch mehr bevorzugt aufweisend einen PA 12-Anteil ≥90 Gew.-%. Ein solches Polyamid kann typischerweise einen Schmelzpunkt von 185°C bis 200°C aufweisen und eignet sich besonders gut zur Extrusion bei Temperaturen höher als 200°C, bevorzugt höher als 210°C gemessen in der Düse. Dank hoher Viskosität kann das Polyamid auch kontrollierter verarbeitet werden.

Es ist bevorzugt, dass neben der Haftvermittlerschicht keine weiteren haftvermittelnden Schichten verwendet werden. Bevorzugt liegt die Haftvermittlerschicht unmittelbar auf der ersten Schicht auf. Bevorzugt liegt die Haftvermittlerschicht auch unmittelbar auf der zweiten Schicht auf. Besonders bevorzugt liegt die Haftvermittlerschicht sowohl auf der ersten als auch auf der zweiten Schicht unmittelbar auf. Weitere Haftvermittler sind dank der guten Haftvermittlung der co-extrudierten Materialien unnötig.

Ein weiterer Aspekt der Erfindung betrifft eine Mehrschichtfilm wie vorstehend ausgeführt, dadurch gekennzeichnet, dass die Masse der Haftvermittlerschicht wenigstens 10 Gew.-%, bevorzugt wenigstens 15 Gew.-%, und besonders bevorzugt 20 Gew.-% des gesamten Mehrschichtfilms ausmacht. Es ist ein Vorteil der relativ hohen Schichtdicke, dass der Mehrschichtfilm auch beim Auftrag auf 3D-Oberflächen nicht ausdünnt und somit die Haftvermittlerfunktion einwandfrei über den gesamten Anwendungsbereich des Mehrschichtfilms hinweg gewährleistet ist.

Ein weiterer Aspekt der Erfindung betrifft einen Mehrschichtfilm wie oben beschrieben, wobei an der ersten Schicht auf der von der Haftvermittlerschicht abgewandten Seite wenigstens eine vierte Schicht anhaftet. Die zugängliche Oberfläche der ersten Schicht kann insbesondere dekoriert, lackiert, beflockt, laminiert oder geklebt werden. Ebenfalls denkbar ist eine Beschichtung durch PU-Überfluten.

An der zweiten Schicht, auf der von der Haftvermittlerschicht abgewandten Seite kann ein Polymerformteil angebracht werden. Ein Aspekt der Erfindung betrifft daher ein beschichtetes Polymerformteil umfassend einen Körper aus einem apolaren Polymer, bevorzugt bestehend aus oder enthaltend Polypropylen, und einen Mehrschichtfilm nach einem der vorhergehenden Ansprüche, wobei die zweite Schicht des Mehrschichtfilms an der Oberfläche des Körpers haftet.

Ein weiterer Aspekt der Erfindung betrifft ein Verfahren zur Herstellung eines Mehrschichtfilms wie oben beschrieben. Das Verfahren umfasst die Schritte flächiges Bereitstellen, insbesondere Co-Extrusion, von einer Mehrzahl von Polymer-Zusammensetzungen, wobei die Zusammensetzung (A) einer ersten Schicht einen polaren Schmelzklebstoff, bevorzugt ein polares thermoplastisches Elastomer, umfasst; und wobei die Zusammensetzung (C) einer zweiten Schicht ein apolares Polymer umfasst, und wobei eine Zusammensetzung (B) einer Haftvermittlerschicht zu wenigstens 50%, bevorzugt zu wenigstens 75%, besonders bevorzugt zu wenigstens 90% aus Polyamid besteht. Die Mehrzahl von Polymer-Zusammensetzungen wird in der räumlichen Reihenfolge

- Zusammensetzung (A) einer ersten Schicht,
- Zusammensetzung (B) einer Haftvermittlerschicht und
- Zusammensetzung (C) einer zweiten Schicht

flächig untereinander verbunden. Es ist bevorzugt, dass die Zusammensetzungen co-extrudiert werden. Das Verfahren ist dadurch gekennzeichnet, dass das Polyamid einen Schmelzpunkt von wenigstens 180°C, bevorzugt von wenigstens 180° und höchstens 205°C, ganz besonders bevorzugt einem Schmelzpunkt von wenigstens 185°C und höchstens 200°C, wie vorstehend beschrieben, aufweist.

Durch ein solches Verfahren lässt sich ein Mehrschichtfilm mit den vorteilhaften Eigenschaften wie oben beschrieben herstellen. Insbesondere besteht der so hergestellte Mehrschichtfilm den Klimawechseltest PV 1200 von VW oder BMW 308.2 wie er in der Autoindustrie verwendet wird. Das Verfahren ist einfach, kostengünstig, umweltschonend und kommt ohne weitere Verfahrensschritte, wie Nachbehandlung, Laminieren, oder Wärmeeintrag aus.

Es ist bevorzugt, dass die Prozesstemperatur bei der Co-Extrusion im Düsenkopf 200°C bis 250°C, bevorzugt 210°C bis 240°C, besonders bevorzugt 220°C bis 230°C beträgt.

Da das eingesetzte Polyamid einen Schmelzpunkt von über 180°C aufweist, muss und kann die Prozesstemperatur im Düsenkopf über 200°C liegen um ein Einfrieren des Polyamids zu verhindern. Die hohe Prozesstemperatur stellt die verbesserte Haftung zwischen den einzelnen Schichten sicher.

Die Erfindung betrifft auch ein Verfahren wie vorstehend beschrieben, wobei auf der von der Haftvermittlerschicht abgewandten Seite der ersten Schicht des Mehrschichtfilms eine vierte Schicht angebracht wird. Insbesondere kann die erste Schicht auf der von der Haftvermittlerschicht abgewandten Seite dekoriert, lackiert, beflockt, laminiert oder geklebt werden. Auch PU-Überfluten kommt in Betracht.

Die Erfindung betrifft auch ein Verfahren wie vorstehend beschrieben, wobei das Verfahren der Herstellung eines beschichteten Polymerformteils dient. Bei dem Verfahren wird ein Mehrschichtfilm wie vorstehend beschrieben bereitgestellt und/oder ein Mehrschichtfilm nach dem erfindungsgemässen Verfahren hergestellt. Das Verfahren umfasst zusätzlich den Schritt: Hinterspritzen des Mehrschichtfilms mit einem apolaren Polymer, bevorzugt bestehend aus oder enthaltend Polypropylen.

Wenn der Mehrschichtfilm als flexible, dünne Folie ausgebildet ist, kann die Folie direkt in das Spritzgiesswerkzeug eingelegt, und dort hinterspritzt, thermogeformt, geschnitten und/oder gestanzt werden. Typischerweise weist der Mehrschichtfilm insgesamt eine Dicke von 10 bis 1000 $\mu$m, bevorzugt von 200 bis 1000 $\mu$m auf. In einer Variante des erfindungsgemässen Verfahrens wird der Mehrschichtfilms jedoch vor dem Hinterspritzen tiefgezogen oder in einer Form thermogeformt. Das Verfahren kann ein Film Insert Molding Verfahren sein. Der im ‚Film Insert Molding'-Verfahren vorgeformte Formling wird typischerweise vor dem Hinterspritzen auch gestanzt oder geschnitten. Dies ist insbesondere dann geeignet, wenn formstabile Folien von beträchtlicher Dicke verwendet werden.

Beim erfindungsgemässen Verfahren wird die Mehrschichtfolie oder allenfalls der Formling derart in die Kavität eines Spritzgusswerkzeugs eingelegt, dass die erste apolare Schicht dem Innenraum der Kavität zugewandt ist, während die zweite Schicht auf der Innenwand der Kavität zu liegen kommt. Das apolare Polymer wird dann in den Innenraum der Form gespritzt. Das eingespritzte Polymer sowie die erste apolare Schicht der Mehrschichtfolie stehen in der Form in Berührung und verbinden sich in der Folge.

Ein weiterer Aspekt der Erfindung betrifft die Verwendung eines beschichteten Polymerformteils nach einem der Ansprüche 5 oder 11 als Bauteil in der Automobil-Industrie.

Beispiele

Um die Erfindung weiter zu illustrieren, werden die folgenden beispielhaften Ausführungsformen beschrieben. Die Ausführungsbeispiele haben keinerlei einschränkende Wirkung auf den Offenbarungsgehalt und den Anspruch der Erfindung.

Es zeigen die folgenden Figuren:

Fig 1    schematische Darstellung einer Coex-Blasfilmextrusion

Fig 2    schematische Darstellung einer Coex-Castfilmextrusion

Fig 3    schematische Darstellung eines erfindungsgemässen Mehrschichtfilms

Herstellung der Muster:

Eine erste, polare Schicht aus thermoplastischem Polyurethan (5 g/m$^2$, nachfolgend: TPU), eine Haftvermittlerschicht aus erfindungsgemässem Co-Polyamid im Wesentlichen bestehend aus PA12 (10g/m$^2$; Kristallinitätsanteil 64%; MVR 11cm$^3$/10min) und eine zweiten, apolare Schicht aus Maleinsäureanhydridgepfropftem Polypropylen (30g/m$^2$, nachfolgend PP) wurden bei 220°C (Düsenkopf) zu einem Dreischichtfilm co-extrudiert (nachfolgend: Muster).

Eine erste, polare Schicht aus thermoplastischem Polyurethan (5 g/m$^2$, nachfolgend: TPU), eine Haftvermittlerschicht aus Hotmelt Co-Polyamid Griltex D 1796 (10g/m$^2$; Schmelzpunkt 155°C, MVR 20cm$^3$/10 min) und eine zweiten, apolare Schicht aus Meleinsäureanhydrid-gepfropftem Polypropylen (30g/m$^2$, nachfolgend PP) wurden bei 190°C (Düsenkopf) zu einem Dreischichtfilm co-extrudiert (nachfolgend: Vergleichsmuster).

Aus dem Muster und dem Vergleichsmuster wurden je zehn Rechtecke (20 x 40cm) ausgeschnitten und seitens der PP-Schicht mit Polypropylen zu Prüfplatten hinterspritzt. Seitens der TPU-Schicht wurde ein Prüfschaum mit reaktivem Klebstoff, aufweisend eine definierte Abzugskraft von 40N/20mm, ohne Wärmeeinwirkung verklebt. Je fünf Prüfplatten von Muster/Vergleichsmuster wurden für den Schaumrisstest vor der Klimawechselbehandlung verwendet, je fünf Platten von Muster/Vergleichsmuster wurden für den Schaumrisstest nach der Klimawechselbehandlung verwendet. Die Platten wurden vor Durchführung der Tests 24 Stunden gelagert.

Schaumrisstest vor Klimawechsel

Auf den 10 Prüfplatten für die Tests vor Klimawechselbehandlung wurden 2 x 20mm breit Streifen durch die verklebte Mehrschichtfolie geschnitten (Rand links und rechts je 0.5mm). Die entstehenden Teststreifen wurden am oberen Ende der Prüfschaum-Schicht erfasst und mit gleichmässigem Krafteintrag im 90°-Winkel von Hand von der Platte abgezogen bis zu einer Risslänge von maximal 10mm. Unterhalb von 10mm Risslänge wurde quer zur Abzugsrichtung ein Schnitt über die Prüfplatten geführt und es wurde das Verfahren über die Streifenreihe unterhalb des Schnitts wiederholt. Es wurde registriert, in welchem Anteil aller Fälle die Trennung im Prüfschaum statt im Mehrschichtverbund erfolgt, womit folglich die Schichtenhaftung im Mehrschichtverbund 40N/20mm übersteigt. In den Fällen, in denen es zu keinem Schaumabriss sondern zu einem Adhäsionsbruch kam, konnte mit einer PESOLA Federwage die Abzugskraft gemessen werden.

Schaumrisstest nach Klimawechsel

Die Prüfplatten mit der verbleibenden Hälfte von Teststreifen wurde dem Klimawechseltest BMW 308.2 unterzogen. Dazu wurden die Prüfplatten 20 Zyklen an je 12 Stunden unterzogen, wobei die Zyklen wie folgt aufgebaut waren: Erhöhen der Temperatur auf 90°C und der Luftfeuchtigkeit auf 80% während 1 Stunde, Halten der Bedingungen während 4 Stunden, Abkühlen der Temperatur auf -30°C während 2 Stunden, Halten der Bedingungen während 4 Stunden, Rückkehr zur Raumtemperatur während 1 Stunde. Die Platten wurden vor Durchführung der Tests wiederum 24 Stunden gelagert.

Auf den 10 Prüfplatten für die Tests nach Klimawechselbehandlung wurden 2 x 20mm breit Streifen durch die verklebte Mehrschichtfolie geschnitten (Rand links und rechts je 0.5mm). Die entstehenden Teststreifen wurden am oberen Ende der Prüfschaum-Schicht erfasst und mit gleichmässigem Krafteintrag im 90°-Winkel von Hand von der Platte abgezogen bis zu einer Risslänge von maximal 10mm. Unterhalb von 10mm Risslänge wurde quer zur Abzugsrichtung ein Schnitt über die Prüfplatten geführt und es wurde das Verfahren über die Streifenreihe unterhalb des Schnitts wiederholt. Es wurde registriert, in welchem Anteil aller Fälle die Trennung im Prüfschaum statt im Mehrschichtverbund erfolgt, womit folglich die Schichtenhaftung im Mehrschichtverbund 40N/20mm übersteigt. In den Fällen, in denen es zu keinem Schaumabriss sondern zu einem Adhäsionsbruch kam, konnte mit einer PESOLA Federwage die Abzugskraft gemessen werden.

Die Resultate der Tests sind in der nachfolgenden Tabelle erfasst:

| Muster Nummer | Durchschnitt % Schaumausriss | | | |
|---|---|---|---|---|
| | Vor dem Klimawechselschrank Test | Durchschnitt % | Nach dem Klimawechselschrank Test | Durchschnitt % |
| 1 | Vergleichsmuster; 100% | | Vergleichsmuster; 80% | |
| 2 | Vergleichsmuster; 100% | | Vergleichsmuster; 50% | |
| 3 | Vergleichsmuster; 100% | 100% | Vergleichsmuster; 90% | 64% |
| 4 | Vergleichsmuster; 100% | | Vergleichsmuster; 60% | |
| 5 | Vergleichsmuster; 100% | | Vergleichsmuster; 40% | |
| 6 | Muster; 100% | | Muster; 95% | |
| 7 | Muster; 100% | | Muster; 90% | |
| 8 | Muster; 100% | 100% | Muster; 80% | 93% |
| 9 | Muster; 100% | | Muster; 100% | |
| 10 | Muster; 100% | | Muster; 100% | |

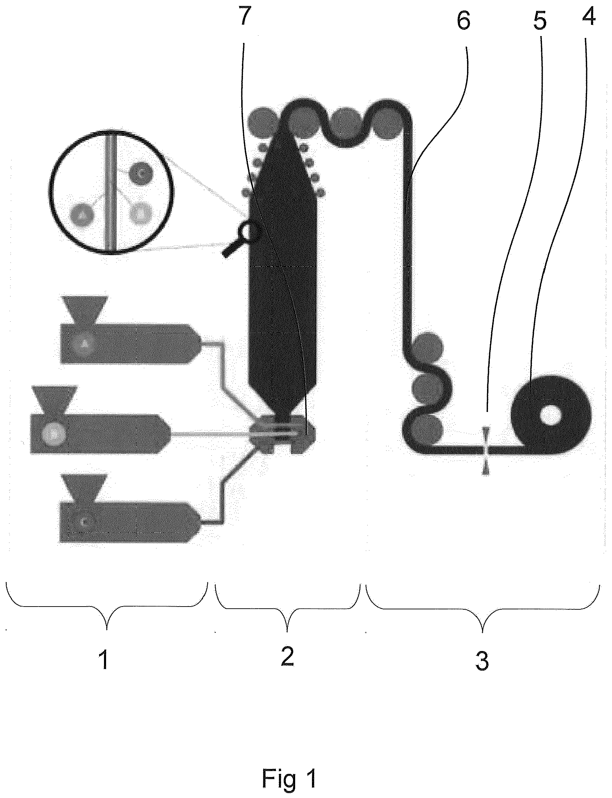

Figur 1 zeigt eine schematische Darstellung einer Blasfilmextrusion. Der erste Abschnitt 1 ist der Extruderabschnitt. Der zweite Abschnitt 2 umfasst den Blasturm mit der Düse 7. Der dritte Abschnitt 3 ist der Abschnitt umfassend den Abzug, den Wickler 4 und ein Beschnitt-Werkzeug 5.

Im Extruderabschnitt 1 werden drei Bestandteile der herzustellenden Mehrschichtfolie 6 extrudiert. Es ist gezeigt, wie die Bestandteile in der Reihenfolge A, B, C räumlich angeordnet werden. Der erste Bestandteil A besteht in diesem Fall aus thermoplastischem Polyurethan. Der zweite Bestandteil C besteht in diesem Fall aus Polypropylen. Der Haftvermittlerbestandteil B besteht in diesem Fall aus Co-Polyamid mit Hauptbestandteil PA12. Die extrudierten Bestandteile werden dem Blasturm zugeführt und in der Düse 7 zur Mehrschichtfolie 6 co-extrudiert. Die Prozesstemperatur in der Düse 7 beträgt 230°C.

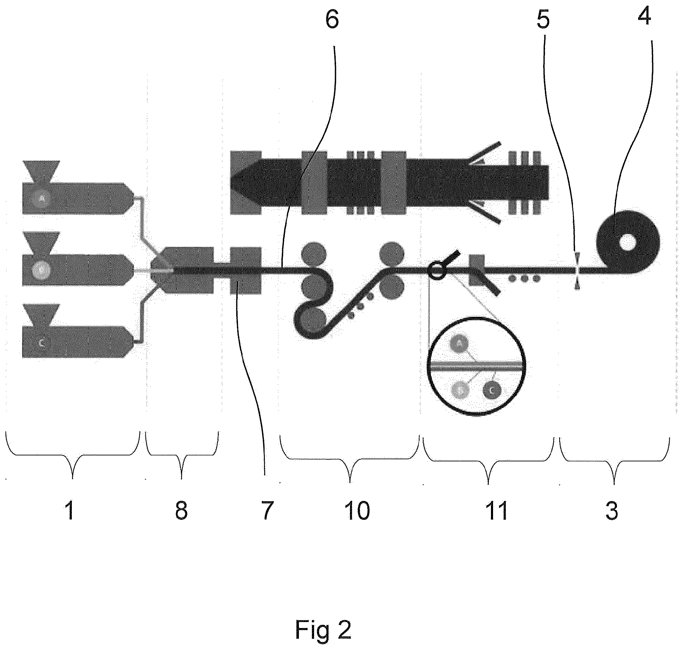

Figur 2 zeigt eine schematische Darstellung einer Castfilmextrusion von der Seite und eine Draufsicht gewisser Abschnitte (Düse, Kalander, Besäumung). Der erste Abschnitt 1 ist der Extruderabschnitt. Der darauffolgende Abschnitt enthält den Feedblock 8. Der darauffolgende Abschnitt enthält die Düse 7. Der darauffolgende Abschnitt ist der Kalanderabschnitt 10. Der darauffolgende Abschnitt ist der Besäumungsabschnitt 11. Der darauffolgende Abschnitt 3 ist der der Abschnitt umfassend den Wickler 4 und ein Beschnitt-Werkzeug 5.

Im Extruderabschnitt 1 werden drei Bestandteile der herzustellenden Mehrschichtfolie 6 extrudiert. Es ist gezeigt, wie die Bestandteile in der Reihenfolge A, B, C räumlich angeordnet werden. Der erste Bestandteil A besteht in diesem Fall aus thermoplastischem Polyurethan. Der zweite Bestandteil C besteht in diesem Fall aus Polypropylen. Der Haftvermittlerbestandteil B besteht in diesem Fall aus Co-Polyamid mit Hauptbestandteil PA12.

Die extrudierten Bestandteile werden dem Feedblock 8 zugeführt, wo die Polymerströme in der richtigen Reihenfolge (A, B, C) und Geschwindigkeit zusammengeführt werden. Durch die Düse 7 werden die Bestandteile zur Mehrschichtfolie 6 co-extrudiert. Die Prozesstemperatur in der Düse 7 beträgt 230°C. Die Mehrschichtfolie 6 wird sodann über den Kalanderabschnitt 10 dem Besäumungsabschnitt 11 zugeführt, wo die Kanten besäumt werden. Die Mehrschichtfolie wird sodann zugeschnitten 5 und gewickelt 4.

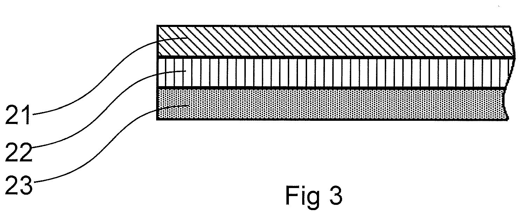

Figur 3 zeigt schematisch einen erfindungsgemässen Mehrschichtfilm. In der gezeigten Variante besteht die oberste Schicht 21 aus Polyurethan (Zusammensetzung A), die zweite Schicht 23 aus Polypropylen (Zusammensetzung C) und die Haftvermittlerschicht 22 aus Polyamid (Zusammensetzung B).

**Patentansprüche**

**1.** Mehrschichtfilm zur Beschichtung eines Polymerformteils umfassend wenigstens

- eine erste Schicht enthaltend einen polaren Schmelzklebstoff, bevorzugt enthaltend ein polares thermoplastisches Elastomer;
- eine zweite Schicht enthaltend ein apolares Polymer;
- eine Haftvermittlerschicht bestehend zu wenigstens 50%, bevorzugt wenigstens 75%, besonders bevorzugt zu wenigstens 90% aus Polyamid, wobei sich die Haftvermittlerschicht zwischen der ersten und der zweiten Schicht befindet;

**dadurch gekennzeichnet dass** das Polyamid einen Schmelzpunkt von wenigstens 180°C, bevorzugt von wenigstens 180° und höchstens 205°C, ganz besonders bevorzugt einem Schmelzpunkt von wenigstens 185°C und höchstens 200°C gemäss ISO 11357 aufweist.

2. Mehrschichtfilm gemäss Anspruch 1, wobei das Polyamid einen Kristallinitätsanteil $\alpha$ > 0.60, bevorzugt ein $\alpha$ von 0.62 bis 0.72, besonders bevorzugt ein $\alpha$ von 0.64 bis 0.70 aufweist.

3. Mehrschichtfilm gemäss einem der vorhergehenden Ansprüche, wobei das Polyamid eine Schmelze-Volumenfliessrate von < 13 cm3/10 min, bevorzugt 6.0 bis 12.0 cm$^3$/10 min, besonders bevorzugt von 7.0 bis 11.0 cm$^3$/10 min aufweist, messbar nach ISO 1133.

4. Mehrschichtfilm nach einem der vorhergehenden Ansprüche, wobei der Mehrschichtfilm durch Co-Extrusion von wenigstens zwei aneinander grenzenden Schichten, bevorzugt durch Co-Extrusion der ersten Schicht, der Haftvermittlerschicht sowie der zweiten Schicht, erhalten wird.

5. Mehrschichtfilm nach einem der vorhergehenden Ansprüche, **dadurch gekennzeichnet dass** ein in der Haftvermittlerschicht enthaltenes Polyamid ausgewählt ist aus der Gruppe bestehend aus Polyamid 6, Polyamid 66, Polyamid 12, PA 46, PA 1010, PA 11; Co-Polyamid aufweisend Einheiten von Polyamid 6, Polyamid 66, Polyamid 12, PA 46, PA 1010, PA 11; Co-Polymer aufweisend Einheiten von Polyamid 6, Polyamid 66, Polyamid 12, PA 46, PA 1010, PA 11; und/oder Block-Co-Polymere aufweisend Polyamid 6-Segmente, Polyamid 66-Segmente, Polyamid 12-Segmente, PA 46-Segmente, PA 1010-Segmente, PA 11-Segmente.

6. Mehrschichtfilm nach einem der vorhergehenden Ansprüche, **dadurch gekennzeichnet dass** die Haftvermittlerschicht wenigstens 10 Gew.-%, bevorzugt wenigstens 15 Gew.-%, und besonders bevorzugt wenigstens 20 Gew.-% des Mehrschichtfilms bildet.

7. Mehrschichtfilm nach einem der vorhergehenden Ansprüche, wobei an der ersten Schicht auf der von der Haftvermittlerschicht abgewandten Seite wenigstens eine weitere Schicht anhaftet.

8. Beschichtetes Polymerformteil umfassend einen Körper aus einem apolaren Polymer, bevorzugt bestehend aus oder enthaltend Polypropylen, und einem Mehrschichtfilm nach einem der vorhergehenden Ansprüche, wobei die zweite Schicht des Mehrschichtfilms an der Oberfläche des Körpers haftet.

9. Verfahren zur Herstellung eines Mehrschichtfilms nach einem der Ansprüchen 1 bis 7 umfassend die Schritte

- flächiges Bereitstellen, insbesondere Co-Extrusion, von einer Mehrzahl von Polymer-Zusammensetzungen, wobei die Zusammensetzung (A) einer ersten Schicht einen polaren Schmelzklebstoff, bevorzugt ein polares thermoplastisches Elastomer, umfasst; und wobei die Zusammensetzung (C) einer zweiten Schicht ein apolares Polymer umfasst; und wobei die Zusammensetzung (B) einer Haftvermittlerschicht zu wenigstens 50%, bevorzugt zu wenigstens 75%, besonders bevorzugt zu wenigstens 90% aus Polyamid besteht;
- wobei die Polymer-Zusammensetzungen in der räumlichen Reihenfolge

- Zusammensetzung (A) einer ersten Schicht,
- Zusammensetzung (B) einer Haftvermittlerschicht,
- Zusammensetzung (C) einer zweiten Schicht flächig untereinander verbunden werden, insbesondere co-extrudiert werden;

**dadurch gekennzeichnet, dass** das Polyamid einen Schmelzpunkt von wenigstens Schmelzpunkt von wenigstens 180°C, bevorzugt von wenigstens 180° und höchstens 205°C, ganz besonders bevorzugt einem Schmelzpunkt von wenigstens 185°C und höchstens 200°C aufweist.

**10.** Verfahren nach Anspruch 9, **dadurch gekennzeichnet, dass** die Prozesstemperatur bei der Co-Extrusion im Düsenkopf (1) 200°C bis 260°C, bevorzugt 210°C bis 250°C, besonders bevorzugt 220°C bis 240°C beträgt.

**11.** Verfahren nach einem der Ansprüche 9 oder 10, zusätzlich umfassend den Schritt

- Anbringen einer weiteren Schicht auf der von der Haftvermittlerschicht abgewandten Seite der ersten Schicht des Mehrschichtfilms.

**12.** Verfahren zur Herstellung eines beschichteten Polymerformteils umfassend die Schritte

- Herstellen eines Mehrschichtfilms gemäss einem der Ansprüche 9 bis 11; und/oder
- Bereitstellen eines Mehrschichtfilms nach einem der Ansprüche 1 bis 7;
weiter umfassend den Schritt
- Hinterspritzen des Mehrschichtfilms mit einem apolaren Polymer, bevorzugt bestehend aus oder enthaltend Polypropylen.

**13.** Verfahren zur Herstellung eines beschichteten Polymerformteils nach Anspruch 12, zusätzlich umfassend den Schritt

- Tiefziehen des Mehrschichtfilms oder Thermoformen und Einlegen des Mehrschichtfilms in eine Form vor dem Hinterspritzen.

**14.** Verwendung eines beschichteten Polymerformteils nach Anspruch 8 oder eines Polymerformteils erhältlich mit einem Verfahren nach Anspruch 12 oder 13 als Bauteil in der Automobil-Industrie.

Fig 1

Fig 2

21

22

23

Fig 3

Europäisches
Patentamt

European
Patent Office

Office européen
des brevets

## EUROPÄISCHER RECHERCHENBERICHT

Nummer der Anmeldung

EP 18 21 5388

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 640 155 A1 (DAIKIN IND LTD [JP]) 29. März 2006 (2006-03-29) | 1-7,9-11 | INV. B32B7/12 |
| A | * Beispiele 7, 9, 12, 13 * | 8,12-14 | B32B27/08 |
| | * Absatz [0045] * | | B32B27/32 |
| | * Absatz [0039] * | | B32B27/34 |
| | * Absatz [0017] * | | B32B27/40 |
| | * Absatz [0019] * | | |
| | ----- | | |
| X | EP 1 296 830 A2 (KUREHA CHEMICAL IND CO LTD [JP]) 2. April 2003 (2003-04-02) | 1,4,5,9 | |
| | * Absatz [0028] * | | |
| | * Absatz [0026] * | | |
| | * Tabellen 1-3 * | | |
| | * Ansprüche 1-14 * | | |
| | ----- | | |
| X | EP 0 358 038 A1 (VISKASE CORP [US]) 14. März 1990 (1990-03-14) | 1,4,5,9 | |
| | * Seite 3, Zeilen 14-17 * | | |
| | * Seite 5, Zeilen 29-32 * | | |
| | * Seite 6, Zeilen 30-36 * | | |
| | * Beispiel 17; Tabelle 5 * | | |
| | ----- | | |

RECHERCHIERTE SACHGEBIETE (IPC)

B32B

Der vorliegende Recherchenbericht wurde für alle Patentansprüche erstellt

| Recherchenort | Abschlußdatum der Recherche | Prüfer |
|---|---|---|
| Den Haag | 4. Juni 2019 | Weiss, Felix |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 21 5388

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-06-2019

| Im Recherchenbericht angeführtes Patentdokument | Datum der Veröffentlichung | Mitglied(er) der Patentfamilie | Datum der Veröffentlichung |
|---|---|---|---|
| EP 1640155 A1 | 29-03-2006 | CN 1809457 A | 26-07-2006 |
| | | CN 101352949 A | 28-01-2009 |
| | | EP 1640155 A1 | 29-03-2006 |
| | | ES 2658833 T3 | 12-03-2018 |
| | | JP 4780153 B2 | 28-09-2011 |
| | | JP 4832081 B2 | 07-12-2011 |
| | | JP 2008296586 A | 11-12-2008 |
| | | JP WO2004110756 A1 | 20-07-2006 |
| | | US 2007098939 A1 | 03-05-2007 |
| | | US 2008311329 A1 | 18-12-2008 |
| | | WO 2004110756 A1 | 23-12-2004 |
| EP 1296830 A2 | 02-04-2003 | AT 530339 T | 15-11-2011 |
| | | AU 7458901 A | 02-01-2002 |
| | | AU 2001274589 B2 | 14-12-2006 |
| | | CN 1447752 A | 08-10-2003 |
| | | DE 01941175 T1 | 01-12-2011 |
| | | EP 1296830 A2 | 02-04-2003 |
| | | ES 2376330 T3 | 13-03-2012 |
| | | JP 4931319 B2 | 16-05-2012 |
| | | JP 2003535733 A | 02-12-2003 |
| | | US 2003157350 A1 | 21-08-2003 |
| | | WO 0198081 A2 | 27-12-2001 |
| EP 0358038 A1 | 14-03-1990 | AT 122370 T | 15-05-1995 |
| | | CA 1341518 C | 19-12-2006 |
| | | DE 68922554 D1 | 14-06-1995 |
| | | DE 68922554 T2 | 29-02-1996 |
| | | EP 0358038 A1 | 14-03-1990 |
| | | US 5053259 A | 01-10-1991 |
| | | US 5344679 A | 06-09-1994 |
| | | US 5480945 A | 02-01-1996 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1808468 A
- WO 2010000483 A
- WO 9944824 A
- WO 2016069335 A

**In der Beschreibung aufgeführte Nicht-Patentliteratur**

- **E. KAISERSBERGER ; ST. KNAPPE ; H. MÖHLER.** TA for Polymer Engineering DSC, TG, DMA. *Netzsch Annual for science and industry,* 1993, vol. 2